# EUROPÄISCHE PATENTSCHRIFT

(11) **EP 1 863 881 B1**
(45) Veröffentlichungstag und Bekanntmachung des Hinweises auf die Patenterteilung: **01.06.2011**
(21) Anmeldenummer: 06725079.5
(22) Anmeldetag: 15.03.2006
(51) Int. Cl.: C09B 67/22

(54) **METALLKOMPLEXFARBSTOFFMISCHUNGEN**
METAL COMPLEX DYE MIXTURES
MELANGES COLORANTS A BASE DE COMPLEXES METALLIQUES

(30) Priorität: 19.03.2005 DE 102005012730
(43) Veröffentlichungstag der Anmeldung: 12.12.2007
(73) Patentinhaber: DyStar Colours Deutschland GmbH, 65926 Frankfurt am Main (DE)
(72) Erfinder: RUCHSER, Thomas, 64347 Griesheim (DE); STEINAU, Oliver, 64342 Seeheim-jugenheim (DE); GIEHL, Andreas, 65527 Niedernhausen (DE)
(86) Internationale Anmeldenummer: PCT/EP2006/060760
(87) Internationale Veröffentlichungsnummer: WO 2006/100200

(56) Entgegenhaltungen:
- EP-A1- 0 061 670
- EP-A2- 0 260 561
- EP-A2- 0 267 385
- DD-A5- 292 665

## Beschreibung

Die vorliegende Erfindung liegt auf dem Gebiet der Säure- und Metallkomplexfarbstoffe.

Einzelfarbstoffe weisen häufig beim Ton-in-Ton Färben von Hydroxy- und Carbonamidgruppen haltigem Material, sowie insbesondere beim Färben von Mischungen aus natürlichen und synthetischen Polyamidfasermaterialien ausgeprägte Schwächen auf, insbesondere beim gleichmäßigen Anfärben der verschiedenen Mischungsbestandteile und beim gleichmäßigen Auszug aus der Färbeflotte. Der Markt fordert jedoch gleichmäßig aufziehende Farbstoffsysteme, die alle Faserbestandteile Ton-in-Ton anfärben.

Das Dokument EP 124679 beschreibt Mischungen von Metallkomplexfarbstoffen zum Färben und Bedrucken von Woll- und synthetischen Polyamid-Mischgeweben oder Garnen, die jedoch hinsichtlich des Ton-in-Ton Färbens dieser Mischgewebe noch Mängel aufweisen.

Aufgabe der vorliegenden Erfindung ist es, Farbstoffmischungen zum Ton-in-Ton Färben von Hydroxy- und Carbonamidgruppen haltigem Material, sowie insbesondere von Mischungen aus natürlichen und synthetischen Polyamidfasermaterialien bereit zu stellen, die diese Nachteile überwinden.

Überraschenderweise wurde gefunden, dass eine Mischung, enthaltend mindestens einen der roten Farbstoffe der nachstehend definierten allgemeinen Formeln (1), sowie mindestens einen der roten Farbstoffe der allgemeinen Formel (2) diese Anforderung erfüllt.

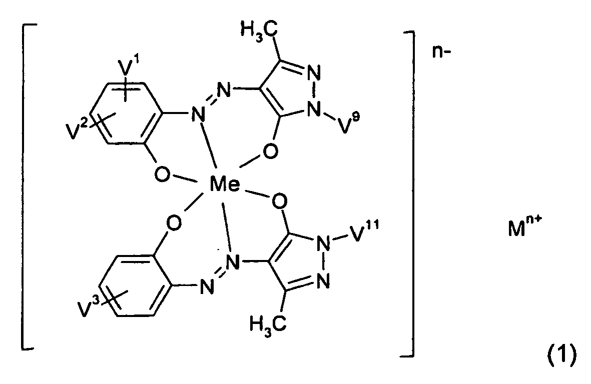

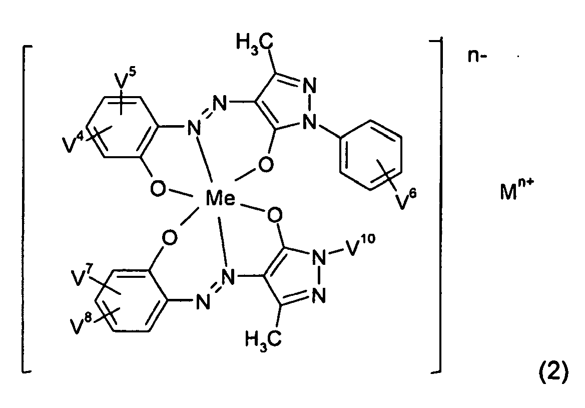

Die vorliegende Erfindung betrifft somit Farbstoffmischungen, die einen oder mehrere Farbstoffe der allgemeinen Formel (1) und einen oder mehrere Farbstoffe der allgemeinen Formel (2) enthalten,
worin bedeuten
- Me: Cr⁽³⁺⁾ oder CO⁽²⁺⁾,
- M: ist Wasserstoff, ein Alkalimetall, wie Natrium, Kalium oder Lithium, oder das Äquivalent eines Erdalkalimetalls, wie Calcium, bevorzugt Wasserstoff und insbesondere Natrium, Kalium oder Lithium;
- n: ist 1 oder 2;
- V¹: bis V⁸ sind unabhängig voneinander Wasserstoff, Cyano, C₁-C₄-Alkyl, C₁-C₄- Alkylsulfonyl, C₁-C₄-Alkoxy, Halogen, Nitro, Sulfo, Sulfamoyl, N-C₁₋₄- Alkylsulfamoyl, N-C₁₋₄-Dialkylsulfamoyl N-C₁₋₂-Alkoxy-C₁₋₂-alkylsulfamoyl, bevorzugt Nitro, Sulfo und Dimethylsulfamoyl
- V⁹ und V¹⁰: sind unabhängig voneinander Phenyl, C₁-C₄-Alkylphenyl, Nitrophenyl, Sulfophenyl, N-C₁₋₄-Alkylsulfamoylphenyl, Halogenphenyl, Cyanphenyl, bevorzugt Phenyl und C₁-C₄-Alkylphenyl, Sulfamoylphenyl; und
- V¹¹: ist Wasserstoff.

Bevorzugte erfindungsgemäße Farbstoffmischungen sind solche, die mindestens einen Farbstoff der allgemeinen Formel (1 b), mindestens einen Farbstoff der allgemeinen Formel (2a) und mindestens einen Farbstoff der allgemeinen Formel (2b) enthalten, 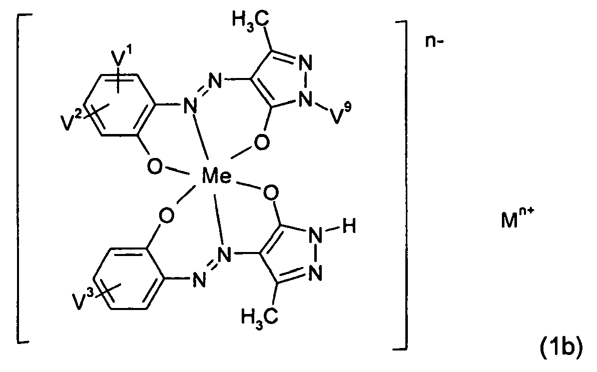 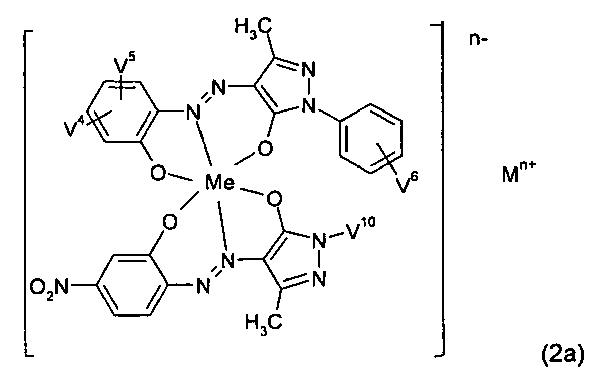 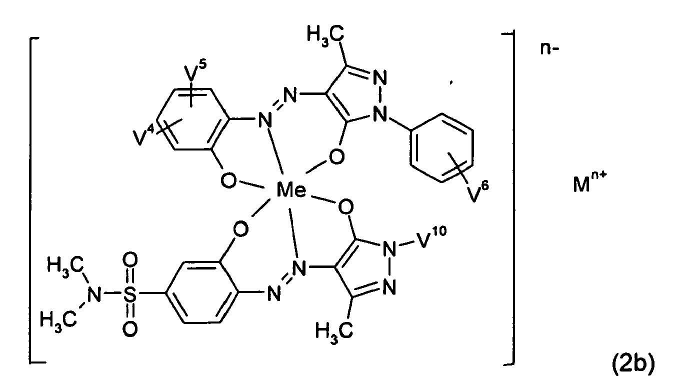 wobei
- Me: Cr ⁽³⁺⁾ oder Co⁽²⁺⁾ ist
- M: Wasserstoff, ein Alkalimetall, wie Natrium, Kalium oder Lithium, oder das Äquivalent eines Erdalkalimetalls, wie Calcium, bevorzugt Wasserstoff und insbesondere Natrium, Kalium oder Lithium ist;
- n: 1 oder 2 ist;
- V¹ bis V⁶: unabhängig voneinander Wasserstoff, Cyano, C₁-C₄-Alkyl, C₁-C₄- Alkylsulfonyl, C₁-C₄-Alkoxy, Halogen, Nitro, Sulfo, Sulfamoyl, N-C₁-₄- Alkylsulfamoyl, N-C₁₋₄-Dialkylsulfamoyl N-C₁₋₂-Alkoxy-C₁₋₂-alkylsulfamoyl, bevorzugt Nitro, Sulfo und Dimethylsulfamoyl sind; und .
- V⁹ und V¹⁰: unabhängig voneinander Phenyl, C₁-C₄-Alkylphenyl, Nitrophenyl, Sulfophenyl, N-C₁₋₄-Alkylsulfamoylphenyl, Halogenphenyl, Cyanphenyl, bevorzugt Phenyl und C₁-C₄-Alkylphenyl, Sulfamoylphenyl bedeuten.

Insbesondere bedeutet Me Chrom ⁽³⁺⁾ und Mⁿ⁺ steht für ein Alkalimetall.

Besonders bevorzugte Farbstoffmischungen enthalten mindestens einen Farbstoff der Formel (1b-1), mindestens einen Farbstoff der Formel (2a-1) und mindestens einen Farbstoff der Formel (2b-1)

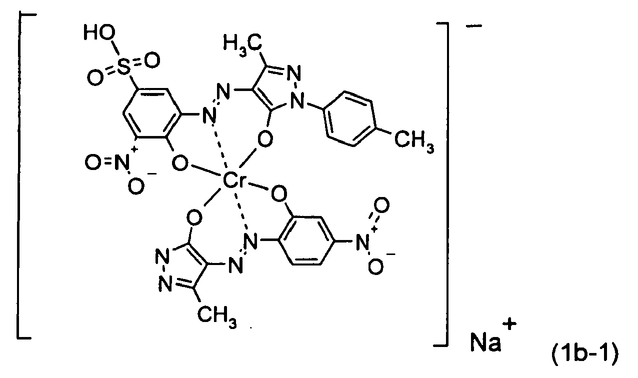

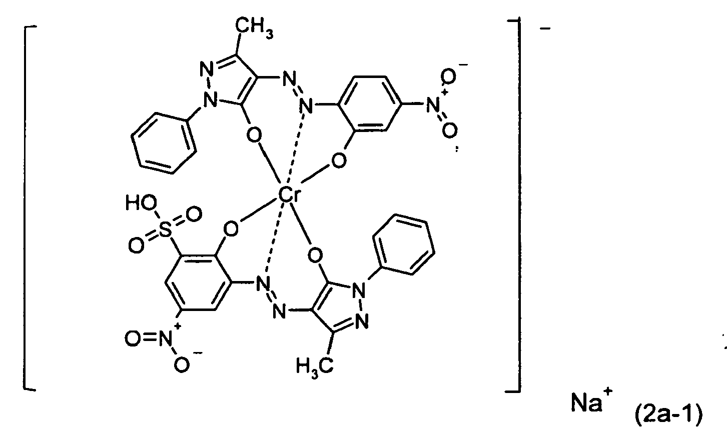

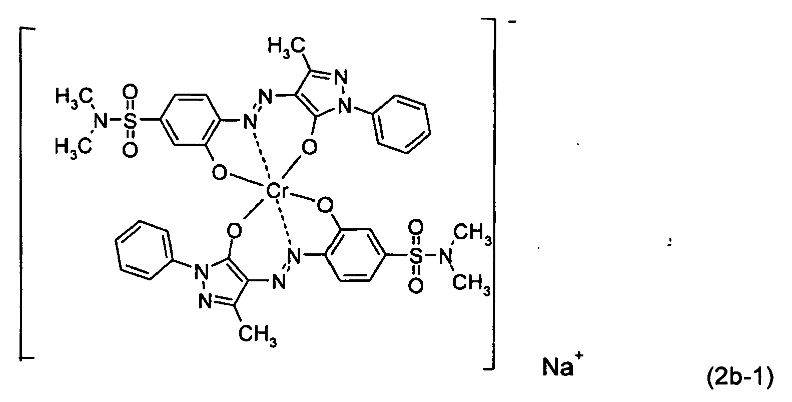

Die erfindungsgemäßen Farbstoffmischungen enthalten Farbstoffe der allgemeinen Formel (1) und Farbstoffe der allgemeinen Formel (2) in einem molaren Verhältnis des oder der Farbstoffe (1) und des oder der Farbstoffe (2) von 95 : 5 bis 5: 95, vorzugsweise von 80 : 20 bis 40 : 60. Im Fall der bevorzugten erfindungsgemäßen Mischungen enthaltend einen Farbstoff der Formel (2a) und einen Farbstoff der Formel (2b) neben einem Farbstoff der Formel (1), beträgt das Verhältnis der Farbstoffe (2b) zu (2a) von 5:95 zu 95:5.

Die Farbstoffe der allgemeinen Formel (1) und der allgemeinen Formel (2) sind als Einzelstoffe hinlänglich bekannt und im Markt verfügbar sowie vielfältig in der Literatur beschrieben und können nach den dort beschriebenen Verfahren hergestellt werden.

Farbstoffmischungen von Phenylazopyrazolonen in Form der 1:2 Metallkomplexe, wobei jede der Pyrazolon Teilstrukturen der jeweils zwei Liganden an einem der Ringstickstoffe einen ggf. substituierten Phenylrest trägt, finden sich in der EP 0267385 sowie der EP 0260561.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösung oder von wässrigen Lösungen der Einzelfarbstoffe generell, welche noch übliche Hilfsmittel enthalten können.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie

Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im Allgemeinen liegen die erfindungsgemäßen Farbstoffmischungen als Farbstoffpulver mit einem Gehalt von 1.0 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wässriger Lösung vorliegen, so beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffmischungen besitzen wertvolle anwendungstechnische Eigenschaften. Sie werden zum gleichmäßigen Färben und Bedrucken von Hydroxy- und Carbonamidgruppen haltigem Material, insbesondere zum gleichmäßigen Färben und Bedrucken von natürlichen oder synthetischen Polyamidfasermaterialien sowie insbesondere zum einbadigen Ton-in-Ton Färben von Mischungen aus natürlichen und synthetischen Polyamidfasermaterialien.verwendet.

Carbonamidgruppenhaltige Materialien sind beispielsweise synthetische und natürliche Polyamide, insbesondere in Form von Fasern, beispielsweise Wolle und andere Tierhaare, Seide, Leder, Polyamid-6,6, Polyamid-6, Polyamid-11 und Polyamid-4. Die genannten Polyamidfasermaterialien können in den verschiedensten Verarbeitungsformen vorliegen, beispielsweise als Faser, Garn, Gewebe oder Gewirke, oder aber in Form von Teppichen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. Dazu können die üblichen, in der Literatur beschriebenen und dem Fachmann bekannten Färbe- und Druckverfahren herangezogen werden (siehe zum Beispiel H.-K. Rouette, Handbuch der Textilveredelung, Deutscher Fachverlag GmbH, Frankfurt am Main).

Die Färbeflotten und Druckpasten können außer den Farbstoffen der allgemeinen Formeln (1) und (2) und Wasser weitere Zusätze enthalten. Zusätze sind beispielsweise Netzmittel, Antischaummittel, Egalisiermittel und die Eigenschaften des Textilmaterials beeinflussende Mittel, wie Weichmachungsmittel, Zusätze zur Flammfestausrüstung und schmutz-, wasser- und ölabweisende oder wasserenthärtende Mittel. Insbesondere Druckpasten können auch natürliche oder synthetische Verdicker, wie beispielsweise Alginate und Celluloseether, enthalten.

In den Färbebädern und Druckpasten können die Farbstoffmengen je nach gewünschter Farbtiefe in weiten Grenzen variieren. Im allgemeinen liegen die Farbstoffe der allgemeinen Formeln (1) und (2) in Mengen von je 0,01 bis 15 Gew.%, insbesondere in Mengen von 0,1 bis 10 Gew.%, bezogen auf das Färbegut bzw. die Druckpaste vor.

Bevorzugt werden die erfindungsgemäßen Farbstoffmischungen nach dem Ausziehverfahren gefärbt. Dabei färbt man vorzugsweise bei einem pH-Wert von 3 bis 7, insbesondere bei 4 bis 6. Das Flottenverhältnis kann innerhalb eines weiten Bereiches gewählt werden und liegt beispielsweise zwischen 1:5 und 1:50, vorzugsweise zwischen 1:5 und 1:30. Man färbt vorzugsweise bei Temperaturen von 70 bis 110°C, insbesondere von 80 bis 105°C.

Zur Erhöhung der Nassechtheiten des gefärbten Materials kann in einer Nachbehandlung nichtfixierter Farbstoff entfernt werden.

Die erfindungsgemäßen Farbstoffmischungen zeichnen sich auf den genannten Substraten durch gleichmäßigen Farbaufbau, gutes Aufzieh- und Fixierverhalten und gute Nuancenkonstanz und außerdem durch gute Echtheiten aus, insbesondere guten Reib-, Nass-, Nassreib- und Lichtechtheiten aus. Besonders vorteilhaft ist die sehr gute Kombinierbarkeit der genannten Farbstoffe.

Die erfindungsgemäßen rot färbende Farbstoffmischungen eignen sich darüber hinaus für Kombinationsfärbungen mit blau oder schwarz färbenden und/oder gelb bis orange färbenden Säurefarbstoffen oder Mischungen von Säurefarbstoffen. zum gleichmäßigen Ton-in-Ton Färben oder Bedrucken von natürlichen oder synthetischen Polyamidfasermaterialien.

Bevorzugte werden in den Kombinationsfärbungen als blau oder schwarz färbende Farbstoffe beispielsweise die folgenden C.l. Farbstoffe Acid Blue 170, 171, 199, 200, 229, 317, 284, 296, 334, 335, Acid Black 058, 060, 061, 063, 099, 107, 131, 132, 140, 207, 218, 220, 222, 244 entsprechend den Formeln (B1) bis (B31) oder Mischungen dieser Farbstoffe eingesetzt:

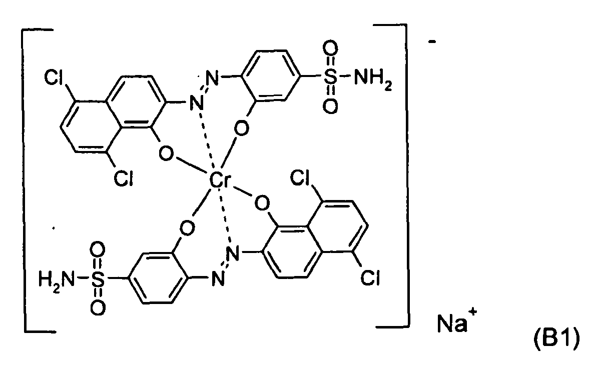

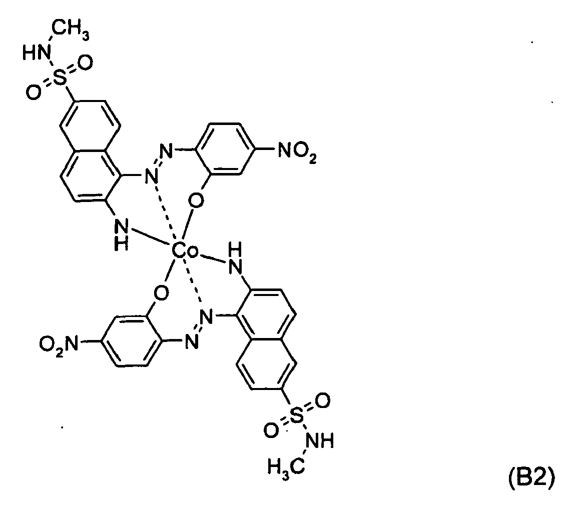

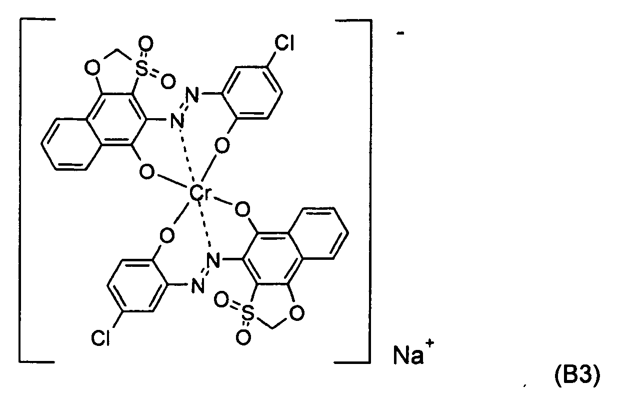

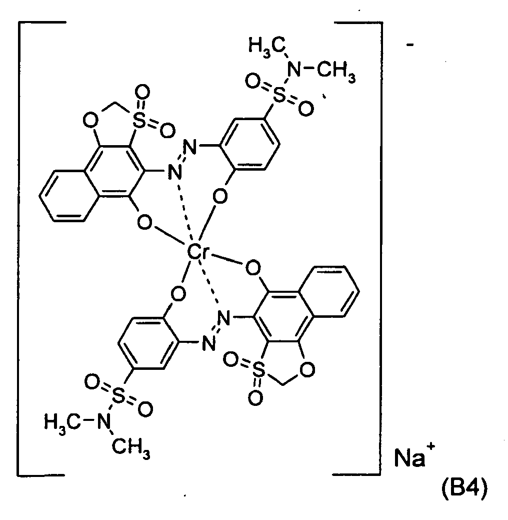

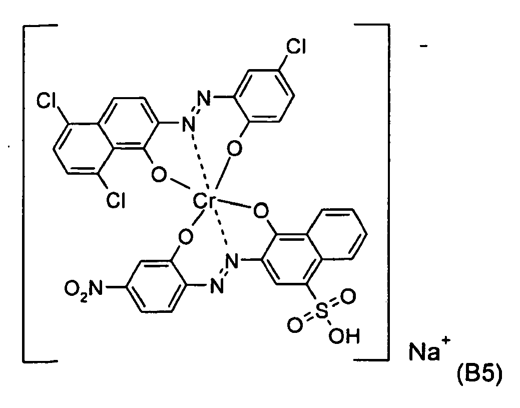

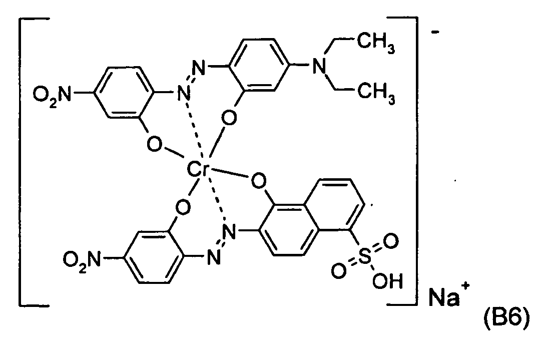

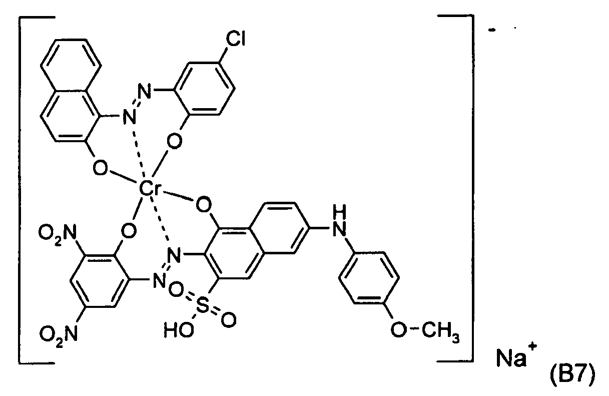

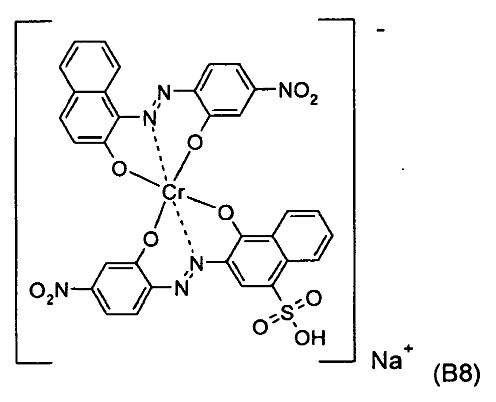

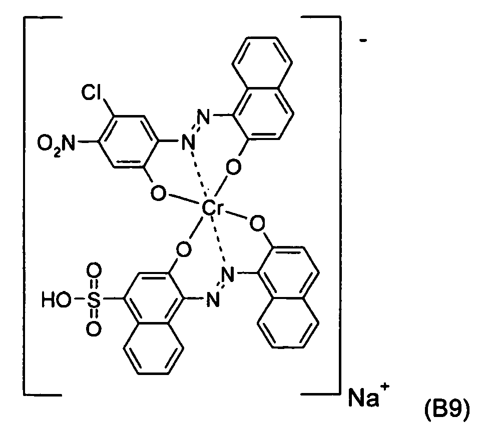

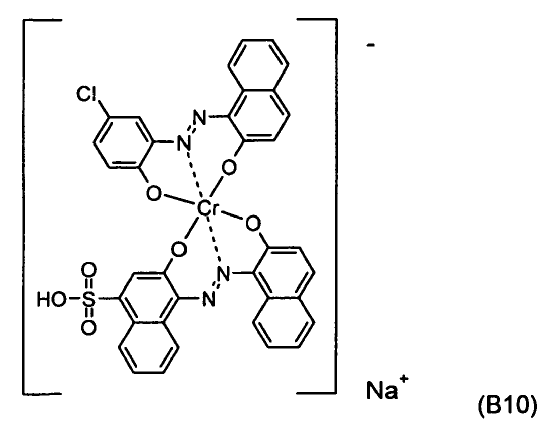

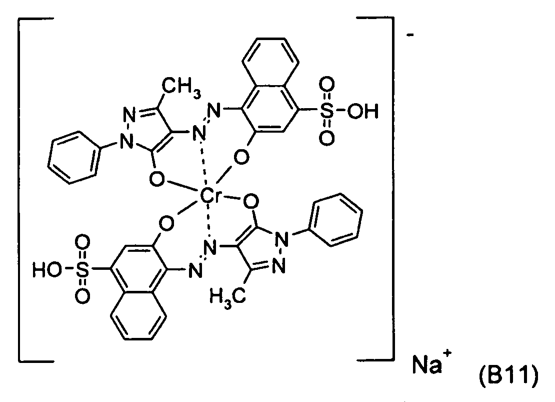

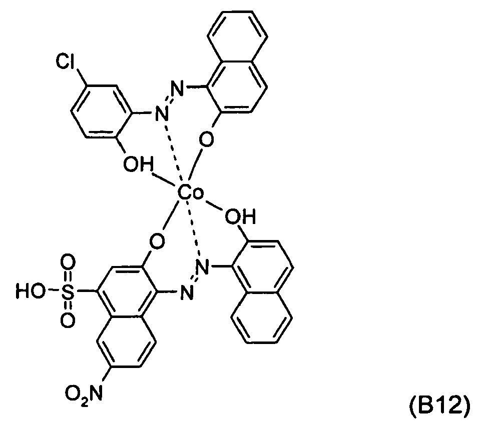

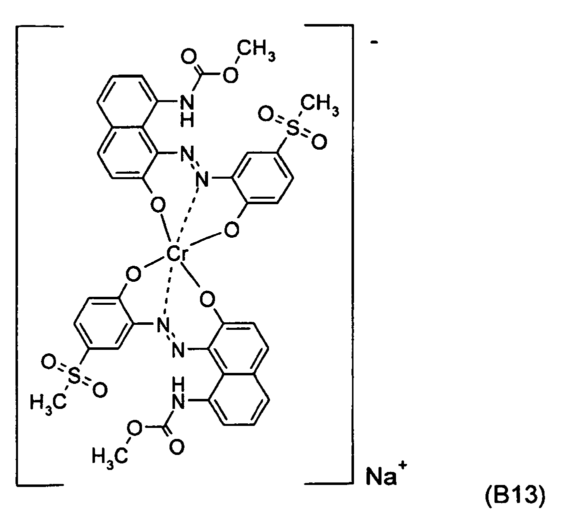

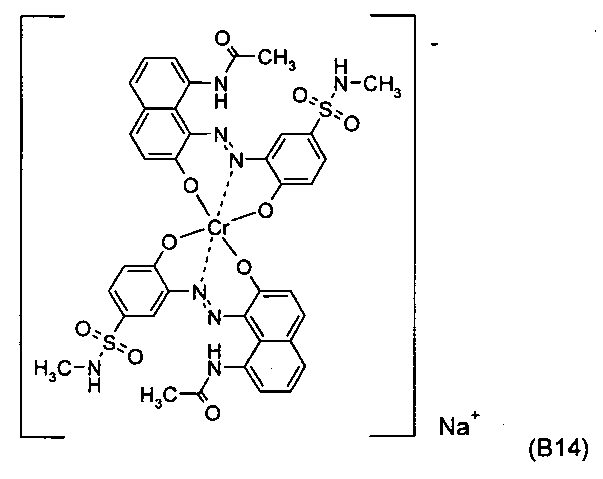

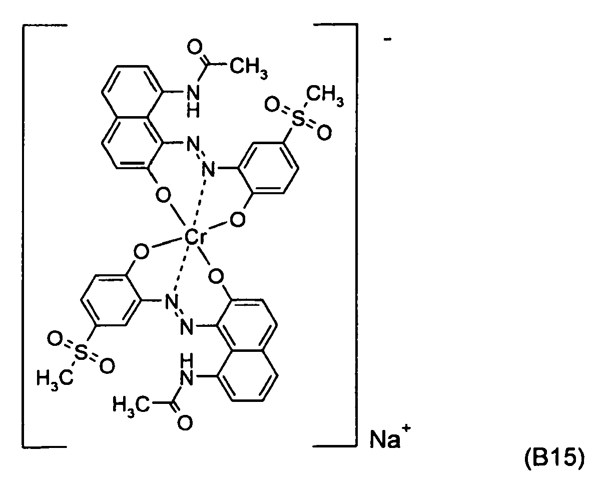

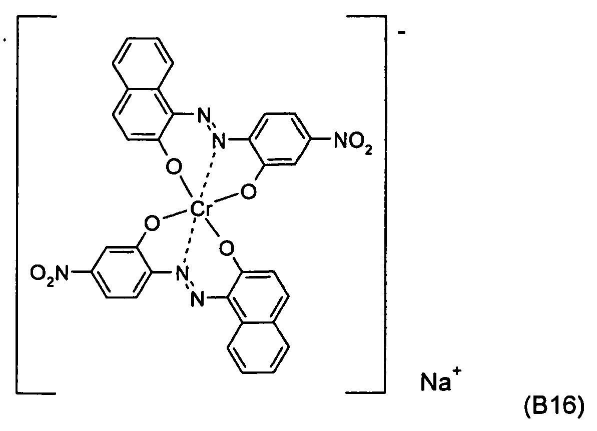

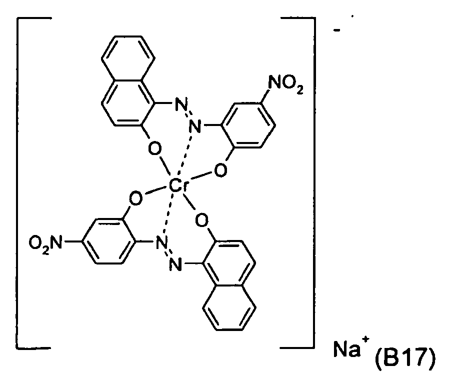

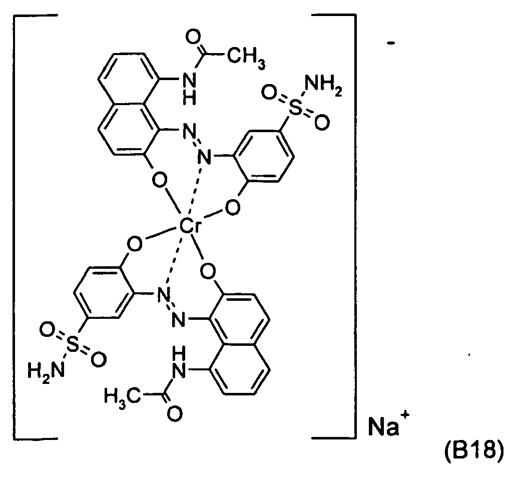

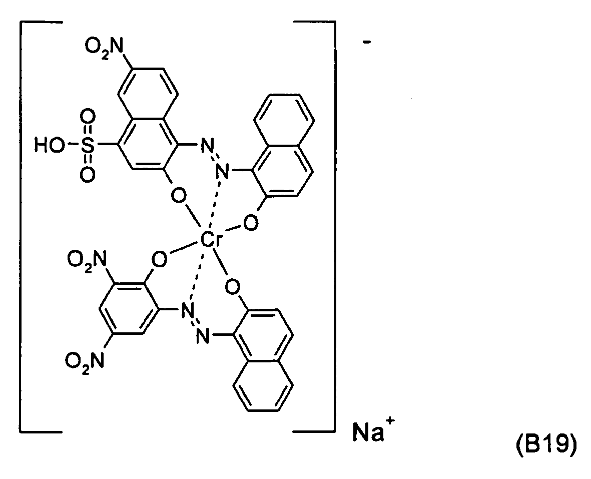

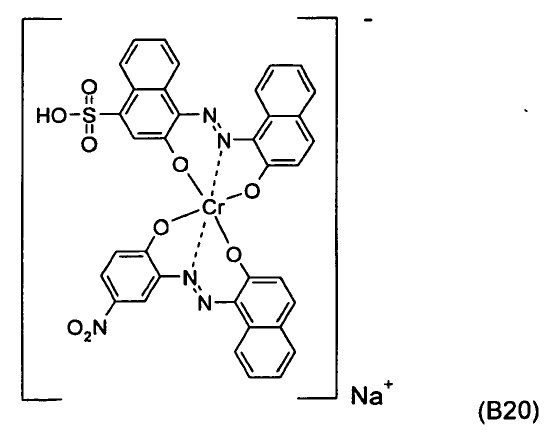

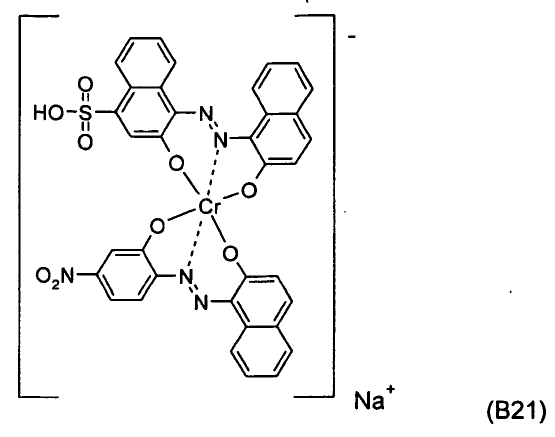

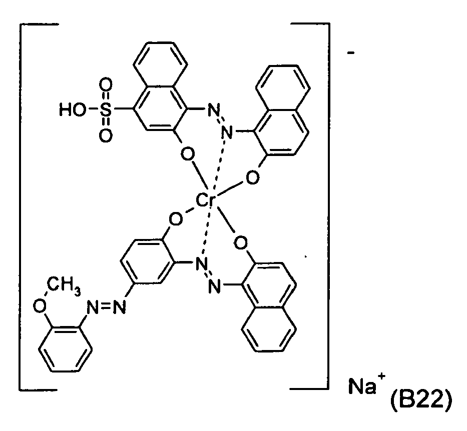

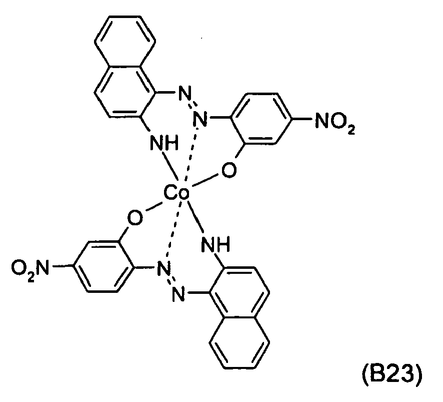

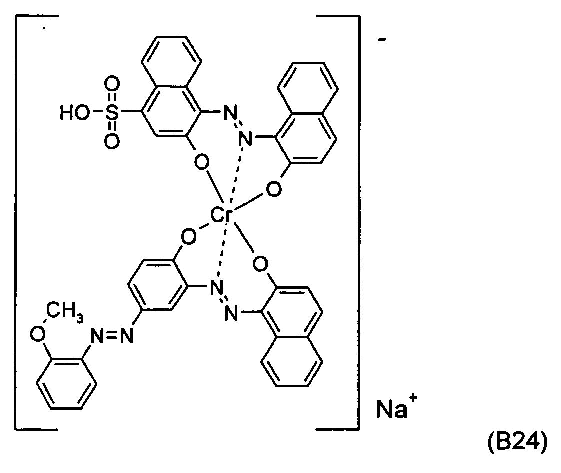

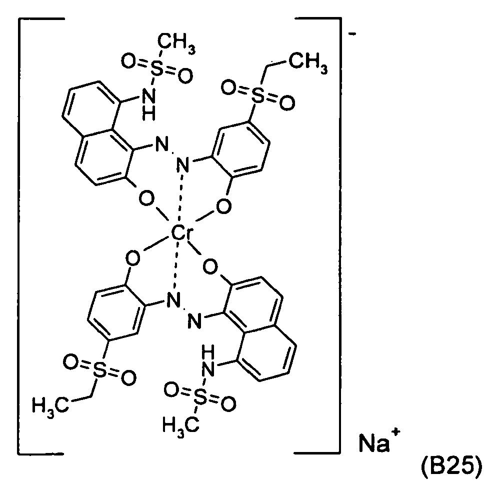

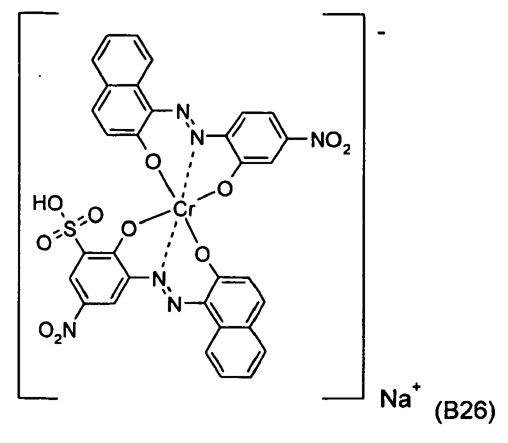

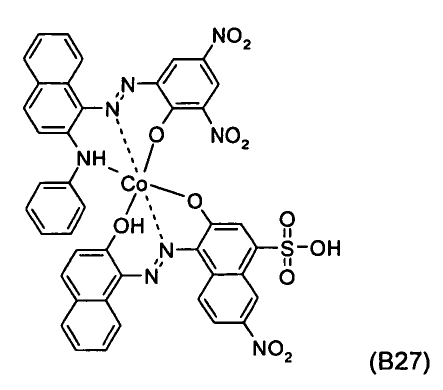

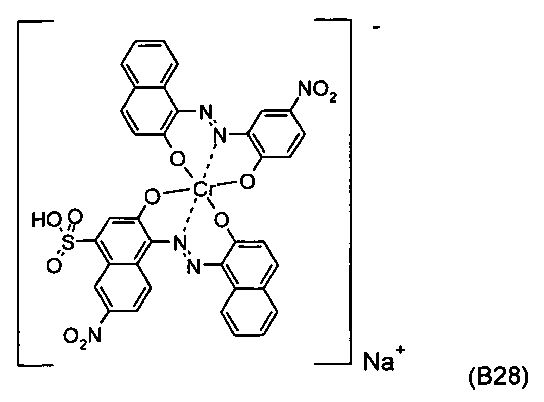

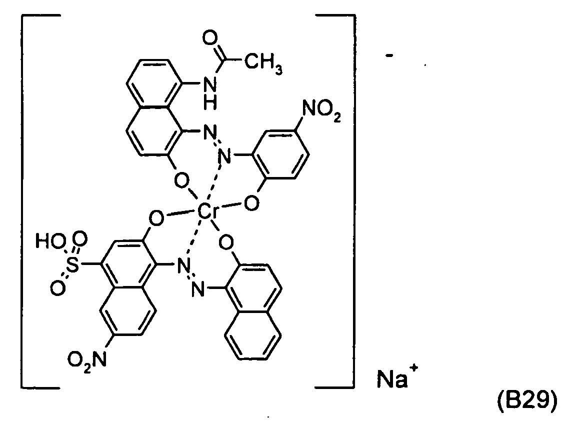

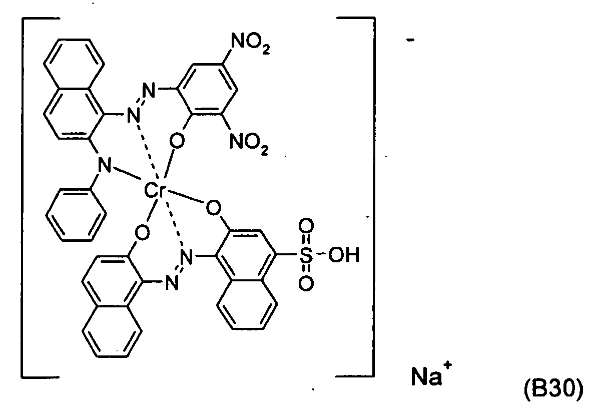

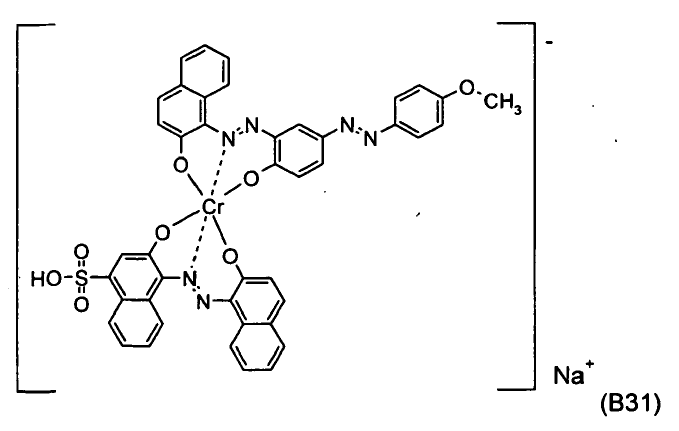

Bevorzugte gelb oder orange färbende Säurefarbstoffe in den Kombinationsfärbungen mit den erfindungsgemäßen roten Farbstoffmischungen sind beispielsweise Farbstoffe der C.l. Bezeichnungen Acid Yellow 059, 116, 119, 137, 151, 155, 177, 182, 220, 232, 235, Acid Orange 060, 080, 086, 088, 107, 108, 117, 130, 144, 154, 162,166, 168 entsprechend den Formeln (G1) bis (G25) oder Mischungen dieser Farbstoffe:

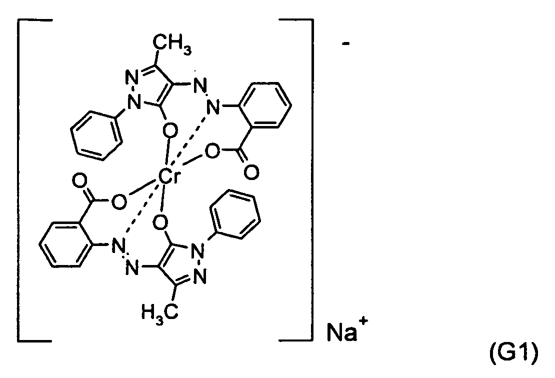

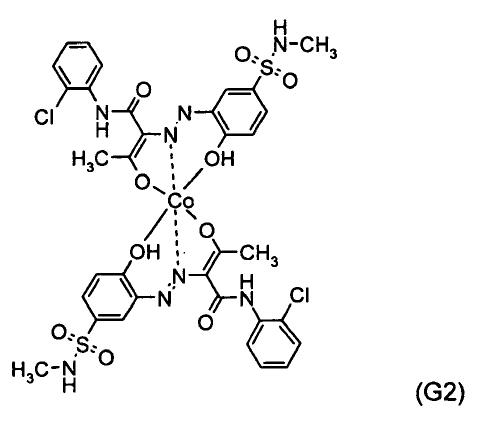

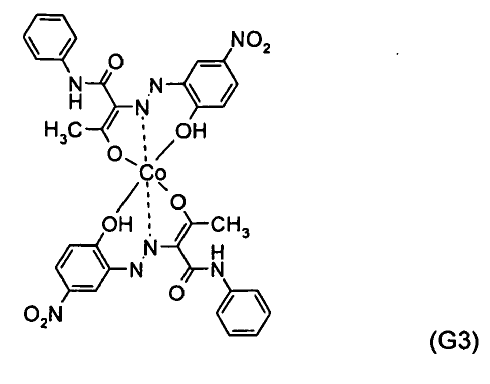

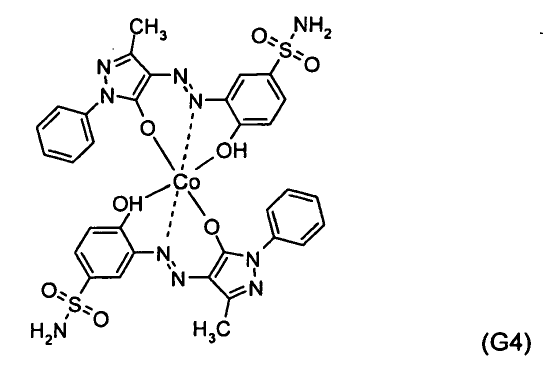

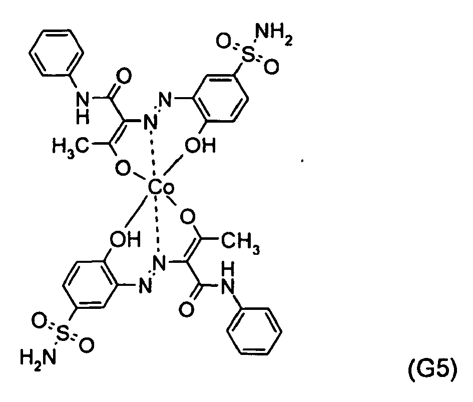

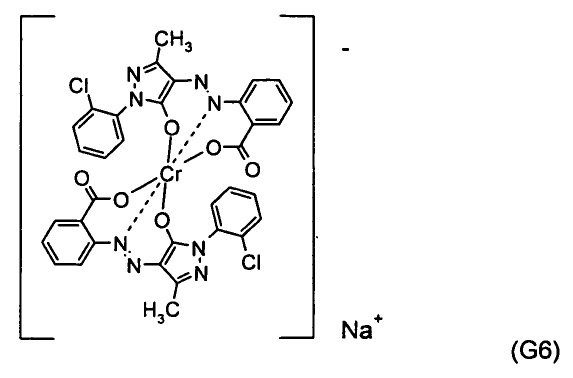

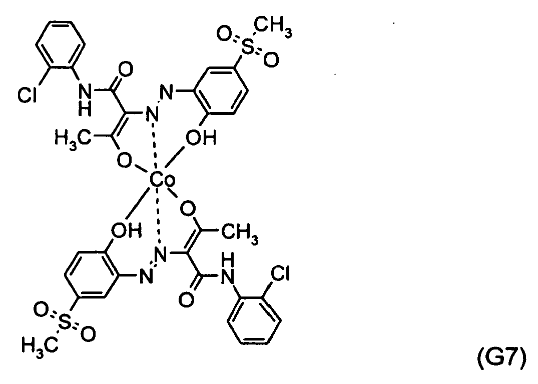

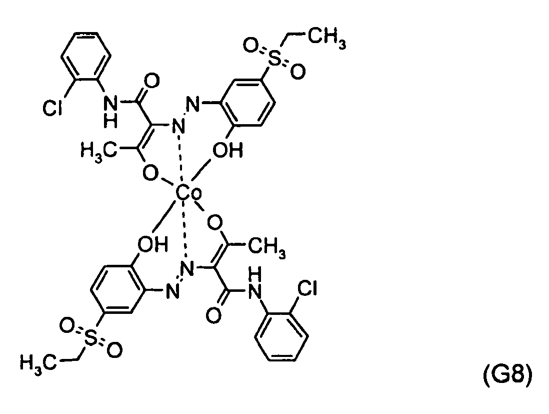

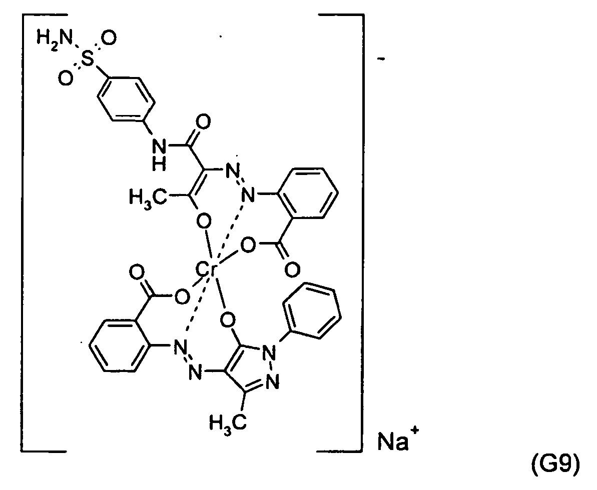

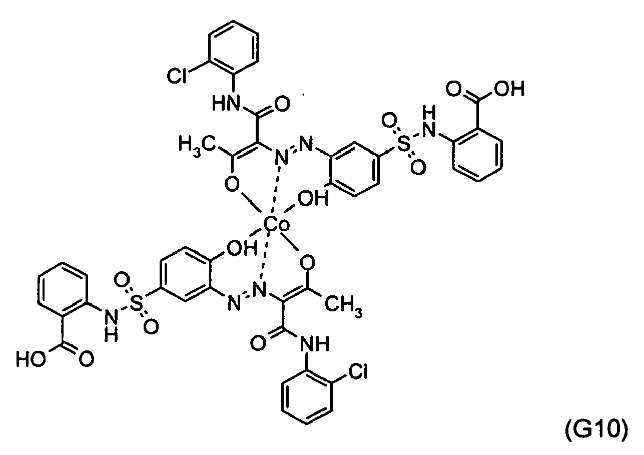

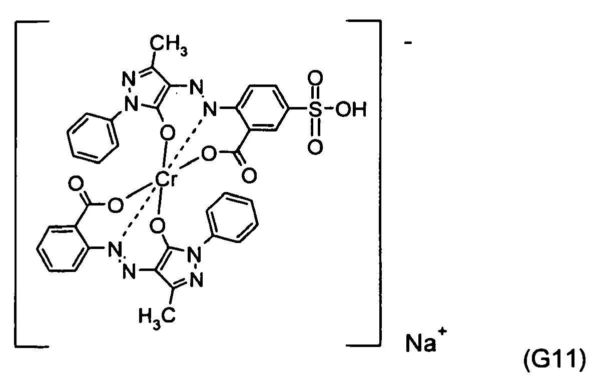

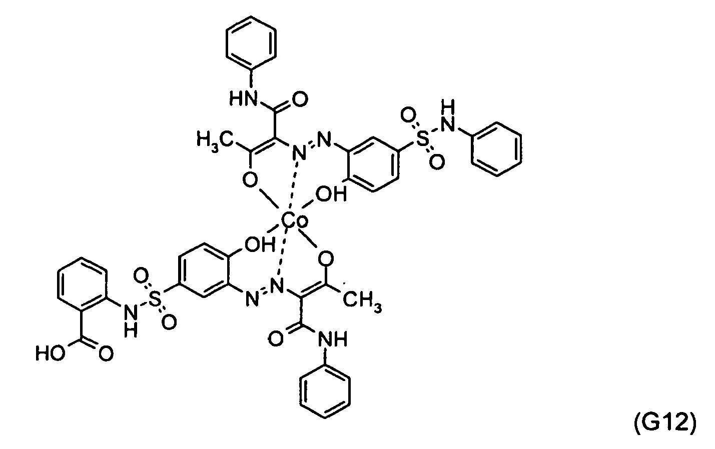

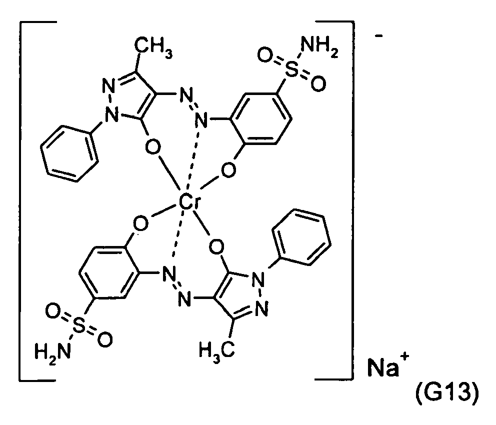

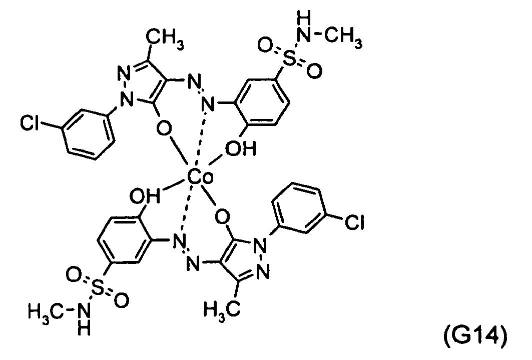

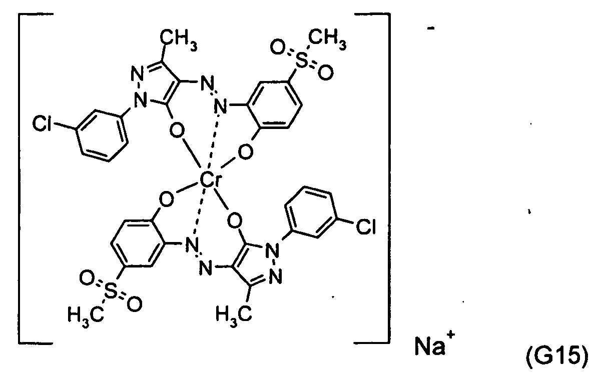

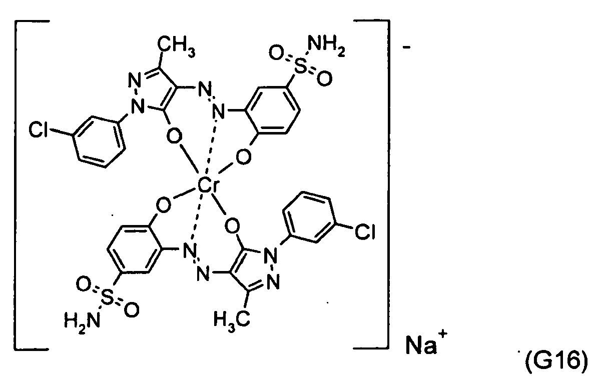

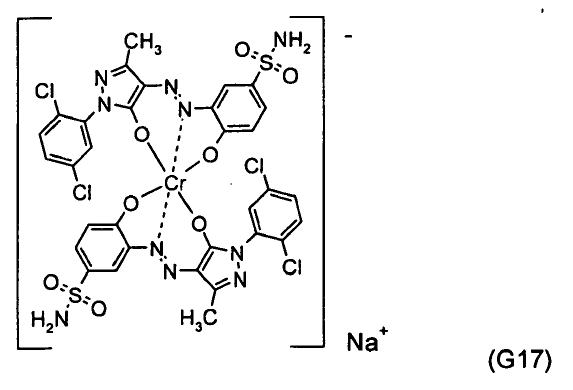

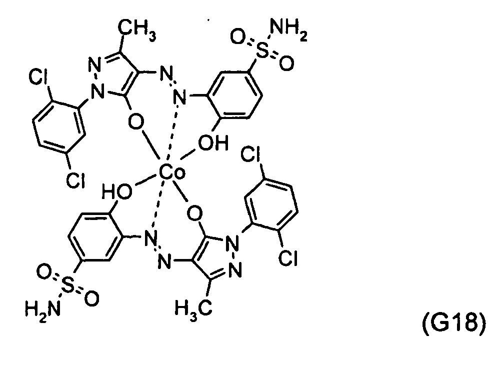

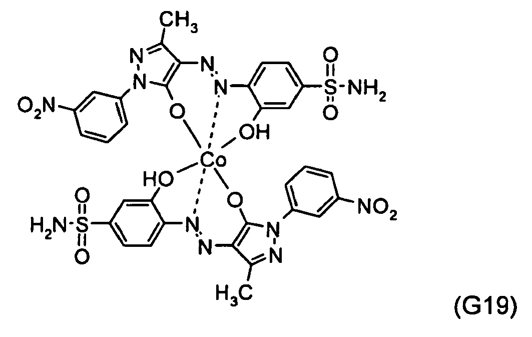

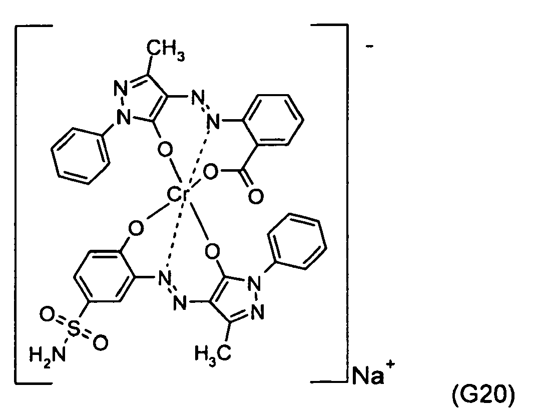

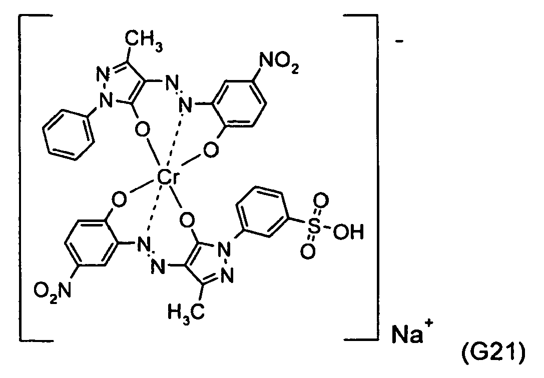

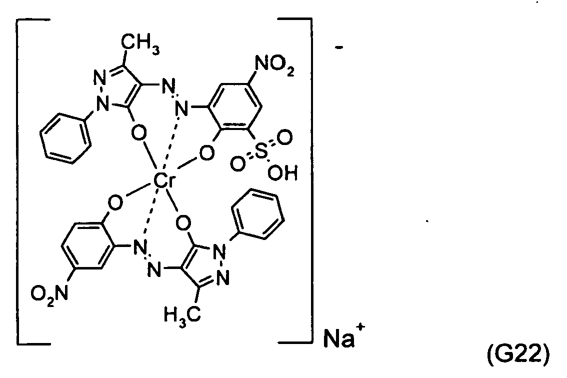

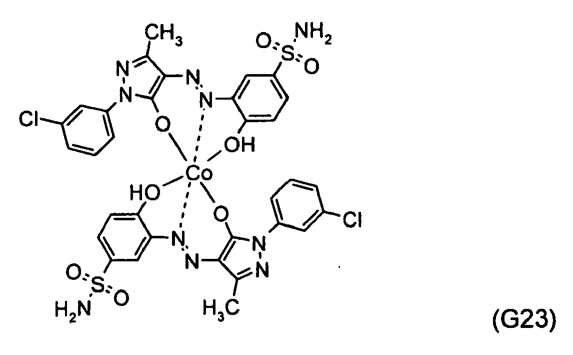

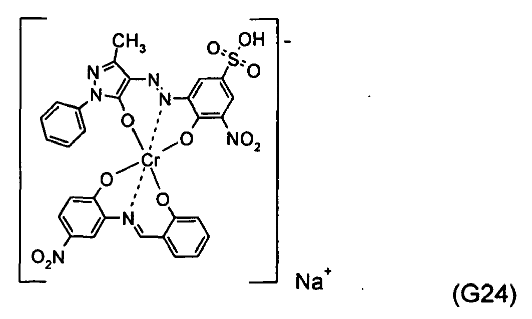

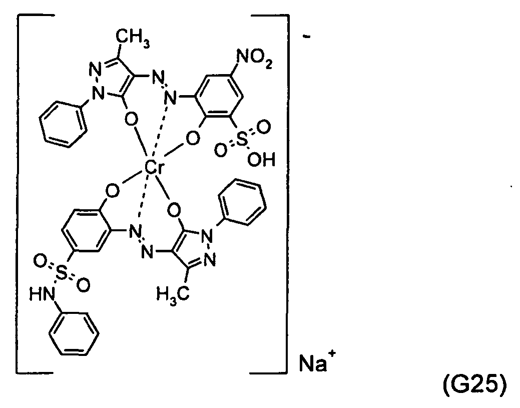

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen werden vorzugsweise in Form ihrer Natrium- oder Kaliumsalze hergestellt und isoliert und zum Färben verwendet.

### Herstellbeispiel 1

Zur Herstellung einer erfindungsgemäßen rotfärbenden Farbstoffmischung enthaltend 60 Teile eines Farbstoffes der Formel (1b-1), 10 Teile eines Farbstoffes der Formel (2a-1) und 30 Teile eines Farbstoffes der Formel (2b-1) werden 60 Teile des Farbstoffe des Formel (1b-1) in Form seines Natriumsalzes mit 30 Teilen des Farbstoffe des Formel (2a-1) in Form seines Natriumsalzes und 10 Teilen des Farbstoffe des Formel (2b-1) in Form seines Natriumsalzes in einem handelsüblichen Mischer zu einer homogenen Mischung verarbeitet, die im nachfolgenden Farbstoffmischung 1 genannt wird.

### Beispiele 2 - 17

Die Herstellung der erfindungsgemäßen Beispiele 2-17erfolgt analog zu Herstellbeispiel 1 mit den folgenden Komponenten:

| Bsp | Farbstoff der allgemeinen Formel 1 | Farbstoffe der allgemeinen Formel 2 |
|---|---|---|
| 2 | 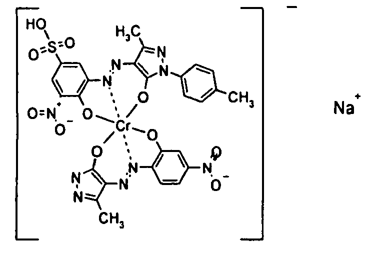 | 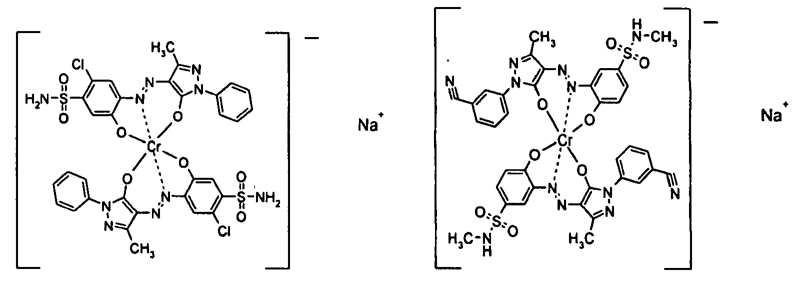 |
| 3 | 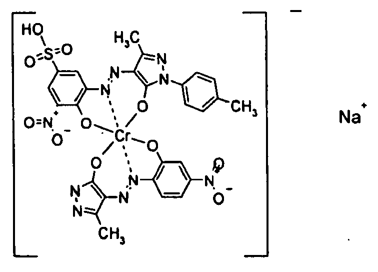 | 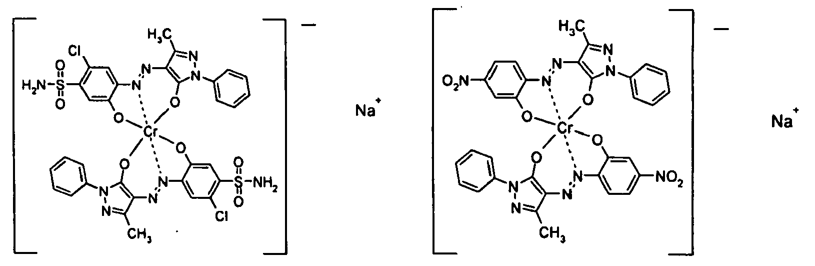 |
| 4 | 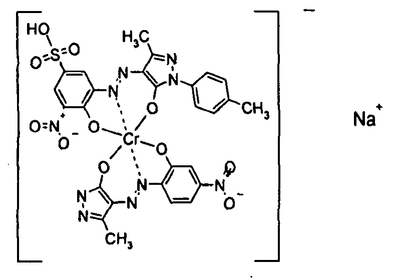 | 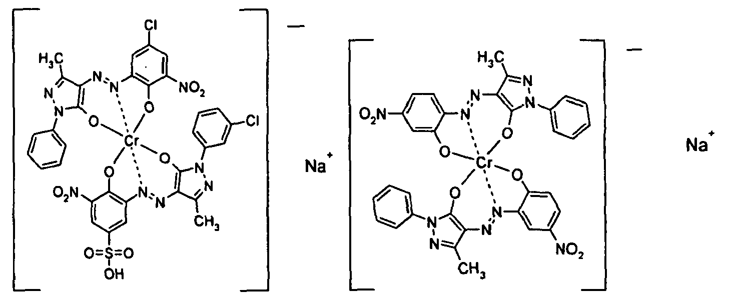 |
| 5 | 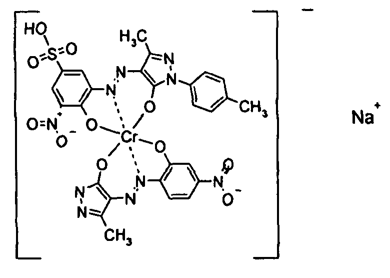 | 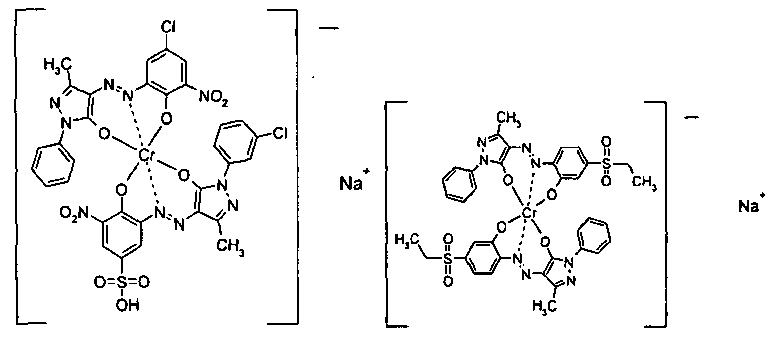 |
| 6 | 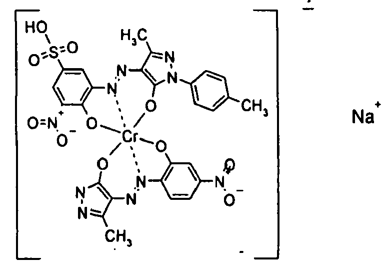 | 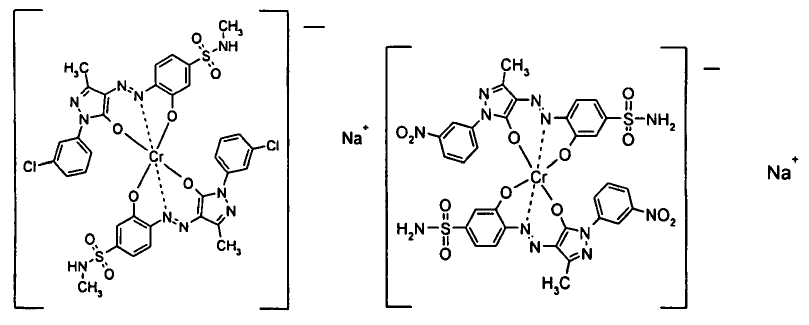 |
| 7 | 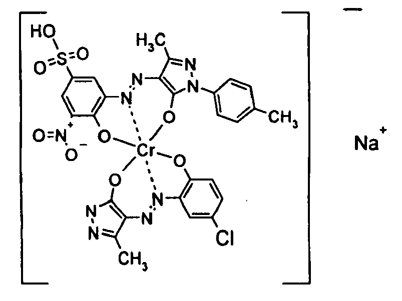 | 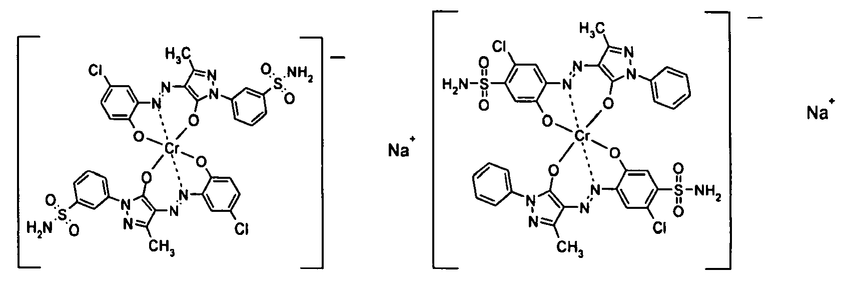 |
| 8 | 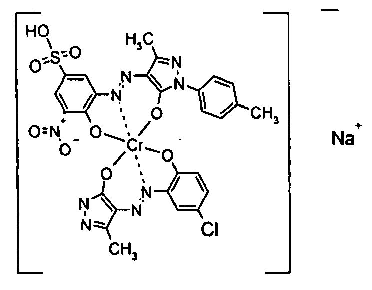 | 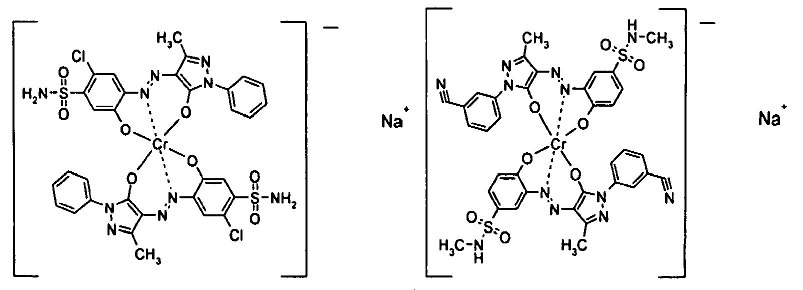 |
| 9 | 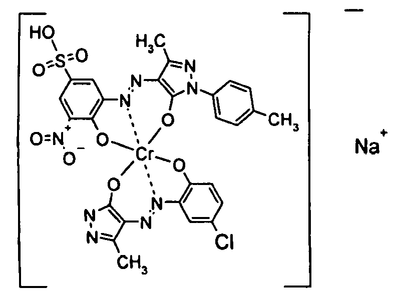 | 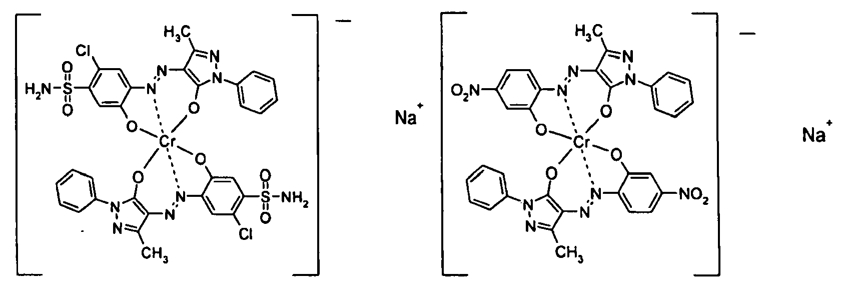 |
| 10 | 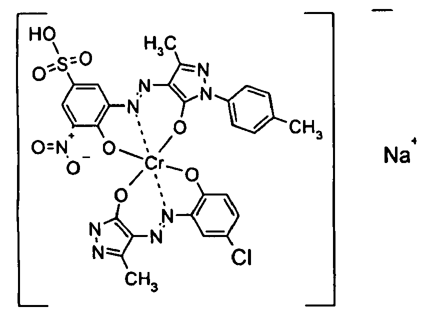 | 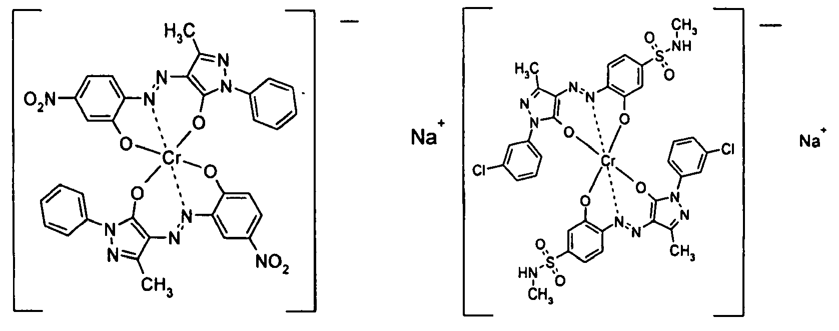 |
| 11 | 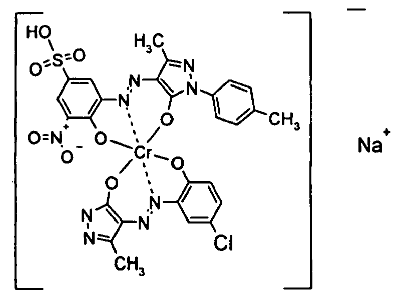 | 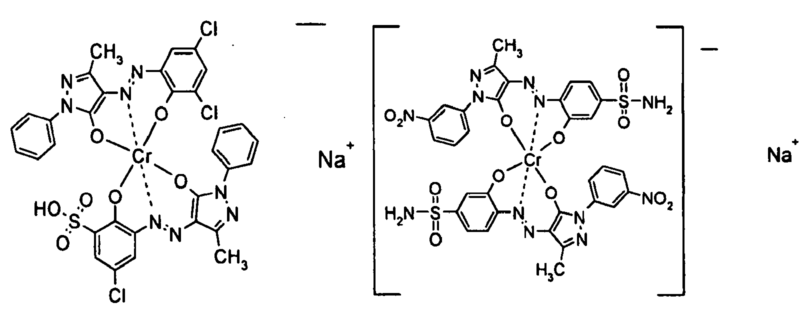 |
| 12 | 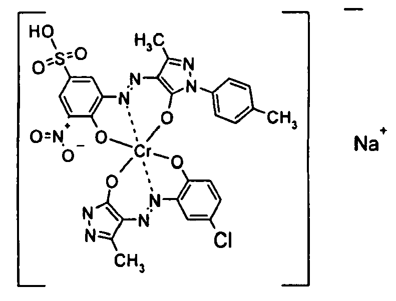 | 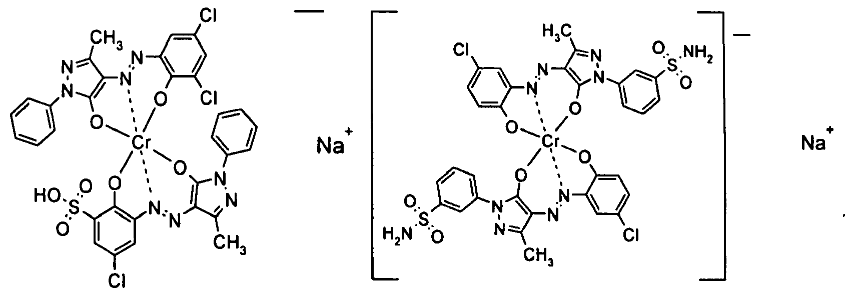 |
| 13 | 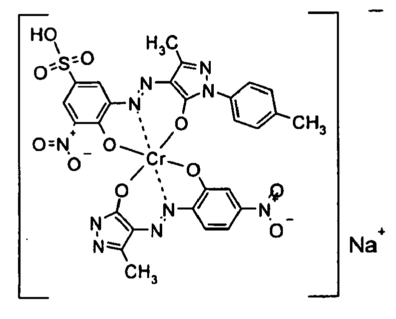 | 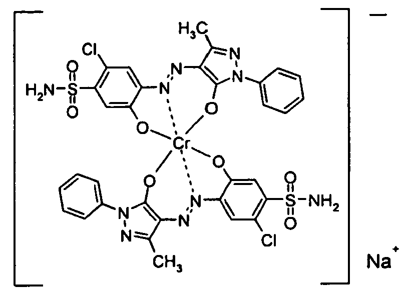 |
| 14 | 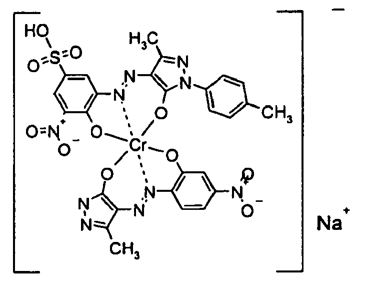 | 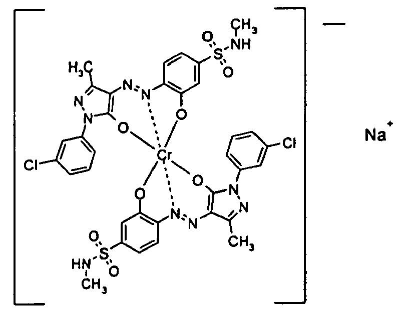 |
| 15 | 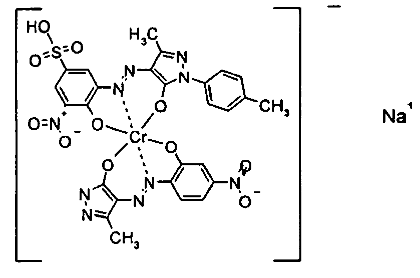 | 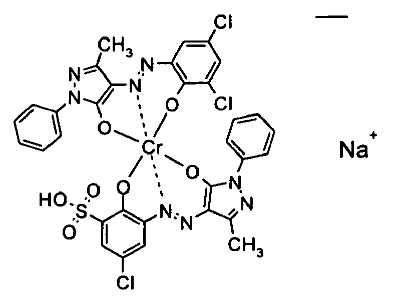 |
| 16 | 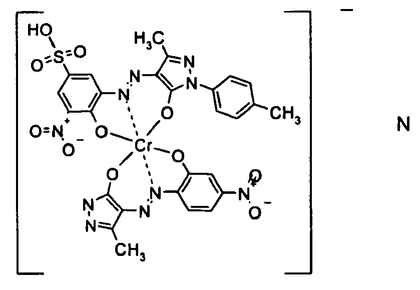 | 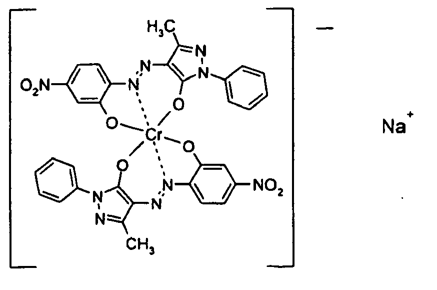 |
| 17 | 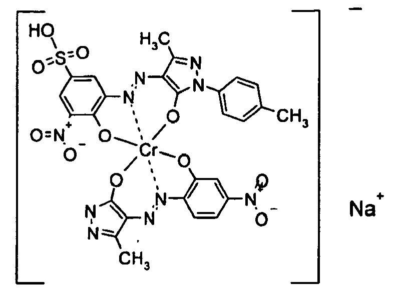 | 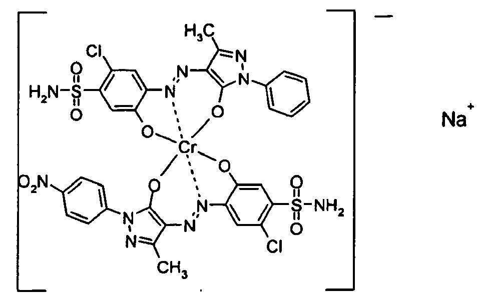 |

### Färbebeispiel 1

Es werden 1 Teil der Farbstoffmischung 1 gemäß Herstellungsbeispiel 1 in 2000 Teilen Wasser gelöst und 5 Teile Natriumsulfat, 1 Teil eines Egalisierhilfsmittels (basierend auf einem Kondensationsprodukt aus einem höheren aliphatischen Amin und Ethylenoxid) sowie 5 Teile Natriumacetat zugegeben.

Dann wird der pH mit Essigsäure (80 %) auf einen Wert von 4,5 gestellt. Das Färbebad wird 10 min auf 50°C erwärmt und es werden dann 100 Teile eines Wollgewebes zugegeben. Man erwärmt innerhalb von 50 min auf eine Temperatur von 100°C und färbt 60 min bei dieser Temperatur. Danach lässt man auf 90°C abkühlen und entnimmt das Färbegut. Das Wollgewebe wird mit warmem und kaltem Wasser gewaschen, anschließend geschleudert und getrocknet.

Es wird eine rote Färbung mit guten Licht- und Nassechtheiten, sowie guter Faseregalität erhalten.

### Färbebeispiel 2

Es werden 1 Teil der Farbstoffmischung gemäß Herstellungsbeispiel 1 in 2000 Teilen Wasser gelöst und 1 Teil eines Egalisierhilfsmittels (basierend auf einem Kondensationsprodukt aus einem höheren aliphatischen Amin und Ehtylenoxid) sowie 5 Teile Natriumacetat zugegeben. Dann wird der pH mit Essigsäure (80%) auf einen Wert von 5 gestellt. Das Färbebad wird 10 Minuten auf 50°C erwärmt und es werden dann 100 Teile eines PA-Gewebes zugegeben. Man erwärmt innerhalb von 50 Minuten auf eine Temperatur von 110°C und färbt 60 Minuten bei dieser Temperatur. Danach lässt man auf 60°C abkühlen und entnimmt das Färbegut. Das PA-Gewebe wird mit warmem und kaltem Wasser gewaschen, geseift und anschließend geschleudert und getrocknet.

Es wird eine rote Färbung mit guten Licht- und Nassechtheiten, sowie guter Faseregalität erhalten.

Entsprechend den Färbebeispielen 1 und 2 werden auch alle Farbstoffmischungen gemäß den Herstellbeispielen 2 - 17 gefärbt.

Weitere Färbebeispiele für Kombinationsfärbungen zur Erzielung verschiedener Farbtöne können den folgenden Tabellenbeispielen entnommen werden. Dunklere oder hellere Färbungen können durch Verwendung entsprechend größerer, bzw. geringerer Mengen Farbstoff erzielt werden.

| Färbebeispiel | Teile | Ton |
|---|---|---|
| 3 | 0,05 Rot färbende Farbstoffmischung 1 | grün |
| | 0,35 Blau färbender Farbstoff der Formel (B8) | |
| | 0,60 Gelb färbender Farbstoff der Formel (G2) | |
| 4 | 0,45 Rot färbende Farbstoffmischung 1 | orange |
| | 0,55 Gelb färbende equimolare Mischung der Farbstoffe der Formeln (G2) und (G10) | |
| 5 | 0,55 Rot färbende Farbstoffmischung 1 | violett |
| | 0,45 Blau färbender Farbstoff der Formel (B8) | |
| 6 | 0,40 Rot färbende Farbstoffmischung 1 | braun |
| | 0,30 Blau färbende equimolare Mischung der Farbstoffe der Formeln (B8) und (B28) | |
| | 0,30 Gelb färbende equimolare Mischung der Farbstoffe der Formeln (G2) und (G10) | |

## Patentansprüche

1. Farbstoffmischungen, die einen oder mehrere Farbstoffe der allgemeinen Formel (1) 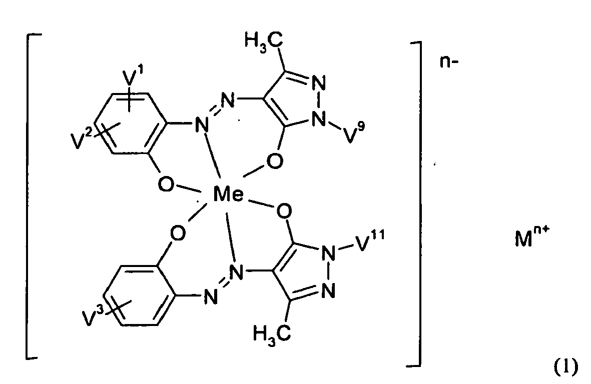 und mindestens einen Farbstoff der allgemeinen Formel (2) enthalten, 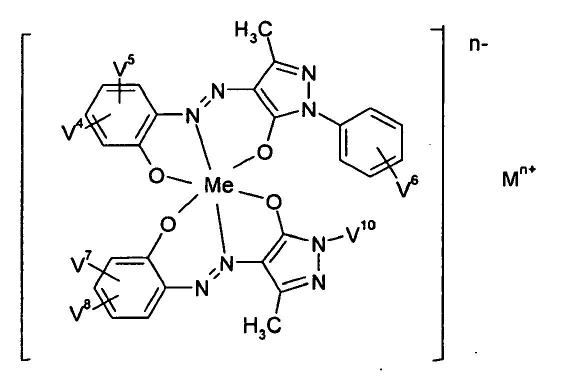 worin bedeuten
Me Cr⁽³⁺⁾ oder Co⁽²⁺⁾,
M ist Wasserstoff, ein Alkalimetall, wie Natrium, Kalium oder Lithium, oder das Äquivalent eines Erdalkalimetalls, wie Calcium, bevorzugt Wasserstoff und insbesondere Natrium, Kalium oder Lithium;
n ist 1 oder 2;
V¹ bis V⁸ sind unabhängig voneinander Wasserstoff, Cyano, C₁-C₄-Alkyl, C₁-C₄- Alkylsulfonyl, C₁-C₄-Alkoxy, Halogen, Nitro, Sulfo, Sulfamoyl, N-C₁₄- Alkylsulfamoyl, N-C₁₋₄-Dialkylsulfamoyl N-C₁₋₂-Alkoxy-C₁₋₂-alkylsulfamoyl, bevorzugt Nitro, Sulfo und Dimethylsulfamoyl
V⁹ und V¹⁰ sind unabhängig voneinander Phenyl, C₁-C₄-Alkylphenyl, Nitrophenyl, Sulfophenyl, N-C₁₋₄-Alkylsulfamoylphenyl, Halogenphenyl, Cyanphenyl, bevorzugt Phenyl und C₁-C₄-Alkylphenyl, Sulfamoylphenyl; und
V¹¹ ist Wasserstoff.

2. Farbstoffmischungen gemäß Anspruch 1 enthaltend mindestens einen Farbstoff der allgemeinen Formel (1 b), mindestens einen Farbstoff der allgemeinen Formel (2a) und mindestens einen Farbstoff der allgemeinen Formel (2b) 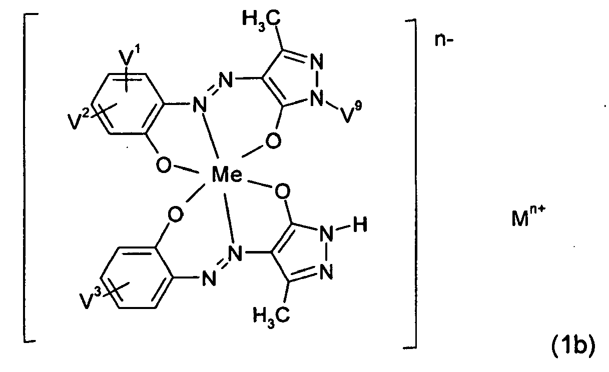 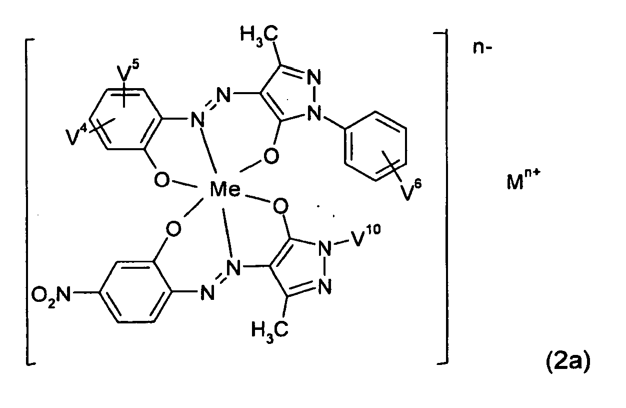 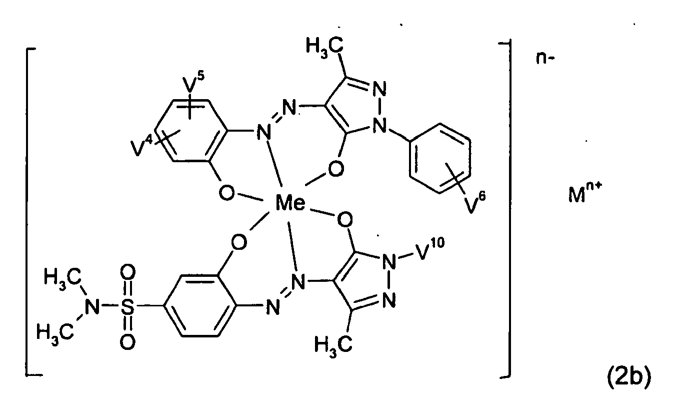 worin V¹ bis V⁶ und V⁹ bis V¹⁰ die in Anspruch 1 genannte Bedeutung haben.

3. Farbstoffmischungen gemäß Anspruch 1 enthaltend Farbstoffe der allgemeinen Formel (1) und Farbstoffe der allgemeinen Formel (2) in einem molaren Verhältnis des oder der Farbstoffe (1) und des oder der Farbstoffe (2) von 95 : 5 bis 5: 95.

4. Farbstoffmischungen gemäß Anspruch 1 enthaltend Farbstoffe der allgemeinen Formel (1) und Farbstoffe der allgemeinen Formel (2) in einem molaren Verhältnis des oder der Farbstoffe (1) und des oder der Farbstoffe (2) von 80 : 20 bis 40 : 60.

5. Verfahren zur Herstellung der Farbstoffmischungen gemäß Anspruch 1 durch mechanisches Vermischen der Einzelfarbstoffe, sei es in Form von deren Farbstoffpulvern oder -granulaten oder deren Syntheselösung oder von wässrigen Lösungen der Einzelfarbstoffe

6. Farbstoffzubereitungen enthaltend Farbstoffmischungen gemäß Anspruch 1 zum Färben und Bedrucken von Hydroxy- und Carbonamidgruppen haltigem Material.

7. Verwendung der Farbstoffmischungen gemäß Anspruch 1 zum gleichmäßigen Färben und Bedrucken von natürlichen oder synthetischen Polyamidfasermaterialien.

8. Verwendung der Farbstoffmischungen gemäß Anspruch 1 zum einbadigen Ton-in-Ton Färben von Mischungen aus natürlichen und synthetischen Polyamidfasermaterialien.verwendet.

9. Verwendung der Farbstoffmischungen gemäß Anspruch 1 in Kombinationsfärbungen mit blau oder schwarz färbenden Farbstoffen Säurefarbstoffen, sowie gelb oder orange färbende Säurefarbstoffen.

10. Verwendung der Farbstoffmischungen gemäß Anspruch 1 in Kombination mit mindestens einem der folgenden Cl Farbstoffe Acid Blue 170, 171, 199, 200, 229, 317, 284, 296, 334, 335, Acid Black 058, 060, 061, 063, 099, 107, 131, 132, 140, 207, 218, 220, 222, 244, Acid Yellow 059, 116, 119, 137, 151, 155, 177, 182, 220, 232, 235, Acid Orange 060, 080, 086, 088, 107, 108, 117, 130, 144, 154, 162,166, 168.

## Claims

1. A dye mixture which comprises one or more dyes of the formula (1) 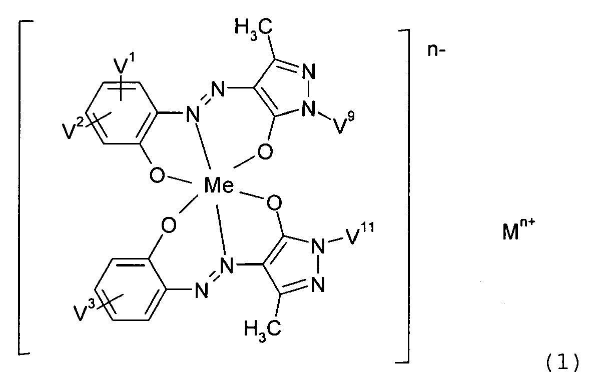 and at least one dye of the formula (2) 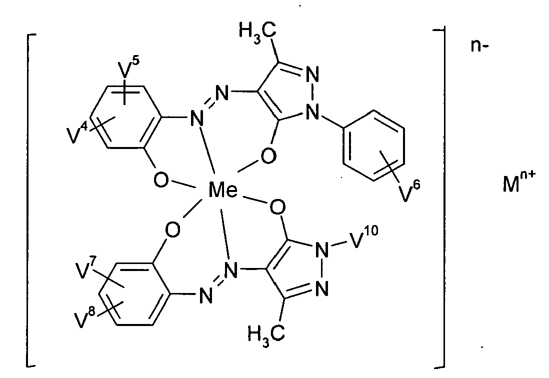 in which
Me is Cr⁽³⁺⁾ or Co⁽²⁺⁾,
M is hydrogen, an alkali metal, such as sodium, potassium or lithium, or the equivalent of an
n alkaline earth metal, such as calcium, preferably hydrogen and particularly sodium, potassium or lithium; is 1 or 2;
V¹ to V⁸ are independently of one another hydrogen, cyano, C₁-C₄-alkyl, C₁-C₄-alkylsulfonyl, C₁-C₄- alkoxy, halogen, nitro, sulfo, sulfamoyl, N-C₁-₄-alkylsulfamoyl, N-C₁₋₄-dialkylsulfamoyl, N-C₁- ₂-alkoxy-C₁₋₂-alkylsulfamoyl, preferably nitro, sulfo, and dimethylsulfamoyl,
V⁹ and V¹⁰ are independently of one another phenyl, C₁- C₄-alkylphenyl, nitrophenyl, sulfophenyl, N-C₁₋₉- alkylsulfamoylphenyl, halophenyl, cyanophenyl, preferably phenyl and C₁-C₄-alkylphenyl, sulfamoylphenyl; and
V¹¹ is hydrogen

2. The dye mixture as claimed in Claim 1, comprising at least one dye of the formula (1b), at least one dye of the formula (2a), and at least one dye of the formula (2b) 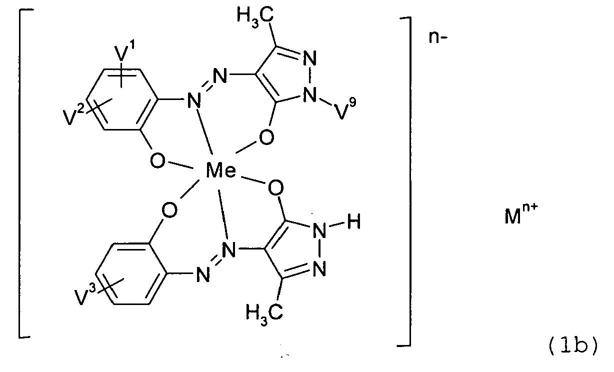 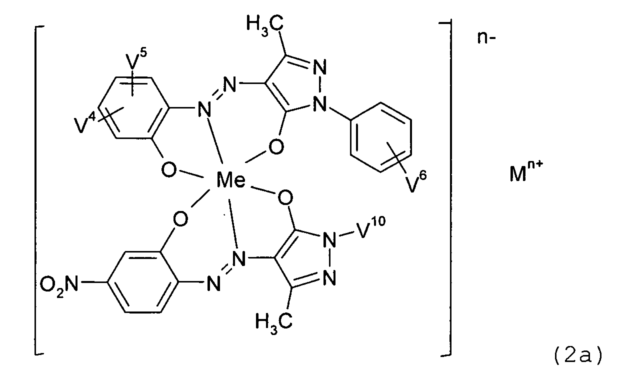 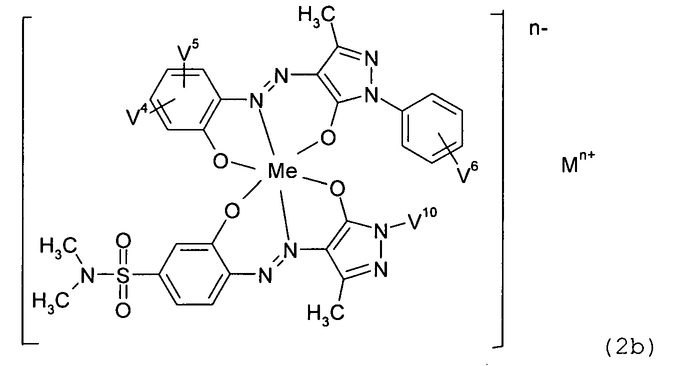 in which V¹ to V⁶ and V⁹ and V¹⁰ are as defined in Claim 1.

3. The dye mixture as claimed in Claim 1, comprising dyes of the formula (1) and dyes of the formula (2) in a molar ratio of dye or dyes (1) to dye or dyes (2) of 95 : 5 to 5 : 95.

4. The dye mixture as claimed in Claim 1, comprising dyes of the formula (1) and dyes of the formula (2) in a molar ratio of dye or dyes (1) to dye or dyes (2) of 80 : 20 to 40 : 60.

5. A process for preparing a dye mixture as claimed in Claim 1 by mechanical mixing of the individual dyes, whether in the form of their powders or granules or their synthesis solution or of aqueous solutions of the individual dyes.

6. A dye preparation comprising a dye mixture as claimed in Claim 1 for dyeing and printing hydroxyl- and carboxamido-containing material.

7. The use of a dye mixture as claimed in Claim 1 for uniformly dyeing and printing natural or synthetic polyamide fiber materials.

8. The use of a dye mixture as claimed in Claim 1 for the single-bath on-tone dyeing of blends of natural and synthetic polyamide fiber materials.

9. The use of a dye mixture as claimed in Claim 1 in combination dyeing with blue- or black-dyeing acid dyes and also yellow- or orange-dyeing acid dyes.

10. The use of a dye mixture as claimed in Claim 1 in combination with at least one of the following CI dyes: Acid Blue 170, 171, 199, 200, 229, 317, 284, 296, 334, 335, Acid Black 058, 060, 061, 063, 099, 107, 131, 132, 140, 207, 218, 220, 222, 244, Acid Yellow 059, 116, 119, 137, 151, 155, 177, 182, 220, 232, 235, Acid Orange 060, 080, 086, 088, 107, 108, 117, 130, 144, 154, 162, 166, and 168.

## Revendications

1. Mélanges de colorants, qui contiennent un ou plusieurs colorants de formule générale (1) 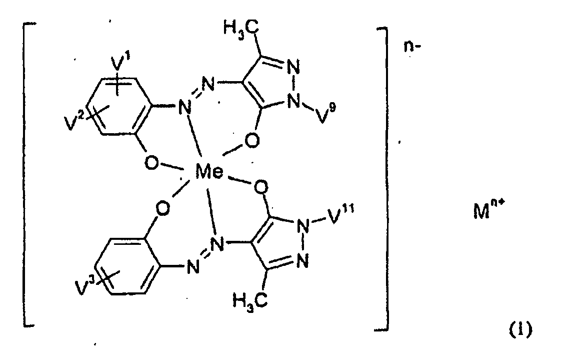 et au moins un colorant de formule générale (2), 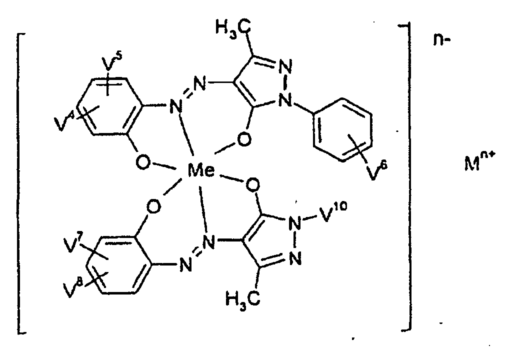 formules dans lesquelles
Me représente Cr⁽³⁺⁾ ou Co⁽²⁺⁾
M est un atome d'hydrogène, un métal alcalin, tel que le sodium, le potassium ou le lithium, ou l'équivalent d'un métal alcalino-terreux, tel que le calcium, de préférence un atome d'hydrogène et en particulier le .sodium, le potassium ou le lithium ;
n est 1 ou 2 ;
V¹ à V⁸ représentent, indépendamment les uns des autres, un atome d'hydrogène ou d'halogène ou un groupe cyano, alkyle en C₁-C₄, alkyl (C₁-C₄) sulfonyle, alcoxy en C₁-C₄, nitro, sulfo, sulfamoyle, N-alkyl (C₁-C₄) sulfamoyle, N-[dialkyl(C₁-C₄)]- sulfamoyle, N-alcoxy(C₁-C₂)-alkyl(C₁-C₂)sulfamoyle, de préférence nitro, sulfo et diméthylsulfamoyle,
V⁹ et V¹⁰ représentent, indépendamment l'un de l'autre, un groupe phényle, alkyl(C₁-C₄)phényle, nitrophényle, sulfophényle, N-alkyl(C₁-C₄)- sulfamoylphényle, halogénophényle, cyanophényle, de préférence phényle et alkyl(C₁-C₄)phényle, sulfamoylphényle ; et
V¹¹ est un atome d'hydrogène.

2. Mélanges de colorants selon la revendication 1, contenant au moins un colorant de formule générale (1b), au moins un colorant de formule générale (2a) et au moins un colorant de formule générale (2b) 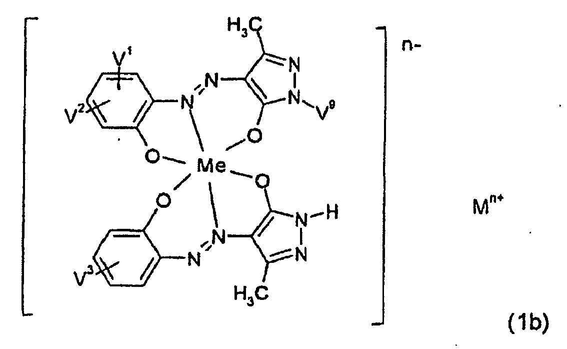 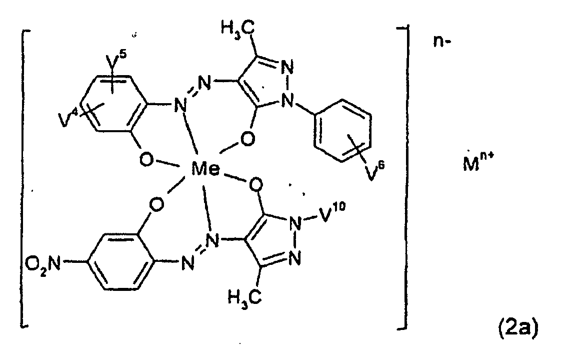 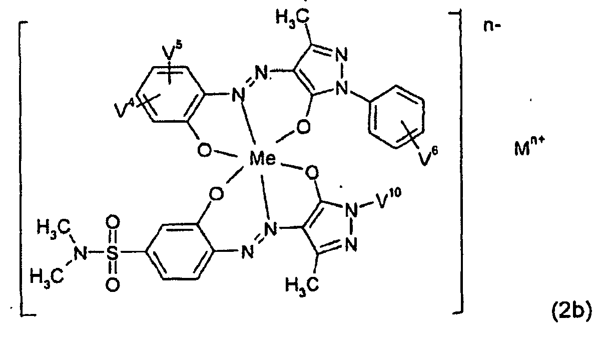 formules dans lesquelles V¹ à V⁶ et V⁹ et V¹⁰ ont les significations données dans la revendication 1.

3. Mélanges de colorants selon la revendication 1, contenant des colorants de formule générale (1) et des colorants de formule générale (2) en un rapport molaire du ou des colorants (1) et du ou des colorants (2) de 95:5 à 5:95.

4. Mélanges de colorants selon la revendication 1, contenant des colorants de formule générale (1) et des colorants de formule générale (2) en un rapport molaire du ou des colorants (1) et du ou des colorants (2) de 80:20 à 40:60.

5. Procédé pour la préparation des mélanges de colorants selon la revendication 1, par mélange mécanique des colorants individuels, que ce soit sous la forme de leurs poudres ou granulés de colorants ou de leur solution de synthèse ou de solutions aqueuses des colorants individuels.

6. Préparations de colorants contenant des mélanges de colorants selon la revendication 1, pour la teinture et l'impression de matière contenant des groupes hydroxy et carbamoyle.

7. Utilisation des mélanges de colorants selon la revendication 1, pour la teinture et l'impression uniformes de matières à base de fibres de polyamide naturelles ou synthétiques.

8. Utilisation des mélanges de colorants selon la revendication 1, pour la teinture ton sur ton en un seul bain de mélanges de matières à base de fibres de polyamide naturelles ou synthétiques.

9. Utilisation des mélanges de colorants selon la revendication 1, dans des teintures en association avec des colorants acides teignant en bleu ou noir ainsi que des colorants acides teignant en jaune ou orangé.

10. Utilisation des mélanges de colorants selon la revendication 1, en association avec au moins l'un des colorants CI suivants Acid Blue 170, 171, 199, 200, 229, 317, 284, 296, 334, 335, Acid Black 058, 060, 061, 063, 099, 107, 131, 132, 140, 207, 218, 220, 222, 244, Acid Yellow 059, 116, 119, 137, 151, 155, 177, 182, 220, 232, 235, Acid Orange 060, 080, 086, 088, 107, 108, 117, 130, 144, 154, 162, 166, 168.
